# EUROPÄISCHE PATENTANMELDUNG

(11) **EP 1 454 961 A2**
(43) Veröffentlichungstag der Anmeldung: **08.09.2004**
(21) Anmeldenummer: 04100090.2
(22) Anmeldetag: 13.01.2004
(51) Int. Cl.: C08L 77/06, C08K 5/353

(54) **Transparente Formmasse für optische Anwendungen**

(30) Priorität: 25.02.2003 DE 10308226
(71) Anmelder: Degussa AG, 40474 Düsseldorf (DE)
(72) Erfinder: Wursche, Roland, Dr., 48249, Dülmen (DE); Kaufhold, Dagmar, 45657, Recklinghausen (DE); Telöken, Berthold, 45768, Marl (DE)

(57) **Zusammenfassung**

Eine Formmasse, die zu mindestens 60 Gew.-% aus transparentem Polyamid besteht, wobei die Formmasse eine wirksame Menge eines oder mehrerer optischer Aufheller enthält und wobei die Menge des optischen Aufhellers so bemessen ist, dass
a) der b-Wert als Maß für die Gelbfärbung maximal 7 beträgt und weiterhin
b) die Transmission zwischen 370 und 430 nm zumindest in einem unteren Teilbereich sowie bei 4 mm Schichtdicke kleiner als 1 % ist,
lässt sich zu Körpern verarbeiten, die weitgehend undurchlässig für UV-Licht sind.

## Beschreibung

Gegenstand der Erfindung ist eine Formmasse auf Basis eines transparenten Polyamids für optische Anwendungen, die eine geringe Eigenfarbe und gleichzeitig einen UV-cut-off bei etwa 400 nm besitzt. Gegenstand der Erfindung sind weiterhin die aus dieser Formmasse hergestellten Formteile.

Transparente Polyamide werden neben anderen Kunststoffen, wie Polycarbonat (PC) und Polymethylmethacrylat (PMMA), als Werkstoffe für die Herstellung von Brillengestellen, Brillengläsern, Linsen, Lupen, Sonnenbrillen, aber auch für Visiere, Schutzmasken, Sicht- und Abdeckscheiben eingesetzt. Geeignet für diesen Zweck sind amorphe Polyamide, die von Natur aus transparent sind; noch besser geeignet sind transparente, jedoch mikrokristalline Polyamidwerkstoffe, da sie im Vergleich zu vollständig amorphen, transparenten Polyamiden, aber auch zu PC oder PMMA aufgrund des kristallinen Anteils eine verbesserte Chemikalien- und Spannungsrissbeständigkeit sowie eine erhöhte Kratz- und Abriebfestigkeit aufweisen.

Bei optischen Anwendungen, etwa bei der Verwendung der transparenten Polyamide als Linsen für Sonnenbrillen, besteht die Aufgabe, den Durchtritt von UV-Licht durch die Linse zu verhindern, um eine Schädigung des Auges durch Licht dieser Wellenlängen zu vermeiden. Üblicherweise versucht man, diese Aufgabe durch das Einbringen von so genannten UV-Absorbern oder UV-Stabilisatoren zu lösen, was auch für transparente Polyamidformmassen gilt.

So wird in der DE 196 42 885 A1 und der EP 0 837 087 A1 der Zusatz von UV-Stabilisatoren zu transparenten Polyamidformmassen erwähnt. In diesen Fällen steht aber offenbar die erstrebte Schutzwirkung für das Polymer im Vordergrund.

Die WO 02 090 421 A1 beschreibt transparente thermoplastische Polyamidformmassen, die zum Ausschluss von UV-Licht unterhalb 400 nm mit UV-Absorbern oder UV-Stabilisatoren ausgerüstet sein können.

Die DE 37 17 928 A1 beschreibt transparente Polyamidformmassen, die neben anderen Inhaltsstoffen auch optische Aufheller enthalten können. Aus dieser Schrift geht aber nicht hervor, dass der optische Aufheller eingesetzt wird, um einen UV-cut-off im Bereich von 370 bis 430 nm zu erreichen.

Unter UV-cut-off wird hier das Vorliegen einer Transmission von weniger als 1 % bei einer bestimmten Wellenlänge verstanden, wobei die Steigung der Transmissionskurve an diesem Punkt positiv ist. Nachdem dieser Punkt durchlaufen ist, steigt die Transmissionskurve stark an.

Die UV/VIS-Absorptionsspektren der als UV-Absorber oder UV-Stabilisatoren eingesetzten Verbindungen zeigen im Flankenbereich eine endliche Steigung. Dies bedeutet, dass kein sprunghafter Abfall der Absorption von sehr hohen Werten auf den Wert Null stattfindet. Betrachtet man die korrespondierende Transmissionskurve, so resultiert dieser Umstand in einem S-förmigen Verlauf, wobei die Kurve im Übergangsbereich zwischen dem Wert Null und dem stoffspezifischen Maximum bei vorgegebener Schichtdicke mit endlicher Steigung ansteigt. Soll nun in einer transparenten Polyamidformmasse ein Ausschluss von Wellenlängen unterhalb von 400 nm erreicht werden, wobei ein handelsüblicher UV-Absorber oder UV-Stabilisator eingesetzt wird, führt dies dazu, dass durch die notwendigerweise stattfindende Absorption der eingesetzten Verbindung bei Wellenlängen oberhalb 400 nm eine deutliche Gelbfärbung der Formmasse resultiert. Dies ist für die angestrebte Anwendung nachteilig. Bei der Anwendung in Sonnenbrillenlinsen etwa entstehen bei der Herstellung von schwach eingefärbten Linsen Einschränkungen. Schwach eingefärbte Linsen bieten in manchen Anwendungen Vorteile und erhöhen die Gestaltungsfreiheit bei der Konzipierung von Sonnenbrillen. Ein deutlich gelber Farbeindruck der Formmasse bleibt bei schwacher Einfärbung wahrnehmbar, was störend wirkt. Eine weitere Zugabe von Farbmitteln, die geeignet ist, diesen Farbeindruck zu überdecken, läuft dem ursprünglichen Ziel einer schwachen Einfärbung zuwider. Manche Farbmittel können darüber hinaus bei höherer Konzentration einen Verlust an Transparenz bewirken.

Wird, um diese Nachteile zu vermeiden, ein UV-Absorber gewählt, der bei gleicher Konzentration in der Formmasse schon bei niedrigeren Wellenlängen, z. B. bei 380 nm, eine nennenswerte Transmission aufweist, kann unter Umständen eine Formmasse mit geringer Gelbfärbung erhalten werden, wobei aber der UV-Schutz nicht ausreichend gewährleistet ist.

Daneben ist zu berücksichtigen, dass die Lage der Transmissionskurve einer Formmasse von der Konzentration des enthaltenen Absorbers beeinflusst wird. So führt eine niedrigere Dosierung des gleichen Absorbers in der Regel zu einer Verschiebung des cut-off zu kleineren Wellenlängen, wobei üblicherweise eine Farbverbesserung resultiert. Allerdings ist dann auch die Schutzwirkung nicht in vollem Umfang gegeben.

Hinzu kommt, dass eine Gelbfärbung auch aus thermooxidativer Schädigung des Polymers resultieren kann.

Als Maß für die Gelbfärbung wird der so genannte b-Wert herangezogen, der dem CIELAB-Farbsystem entstammt (DIN 6174). Dabei bedeutet eine Verringerung des b-Werts im positiven Wertebereich von b eine Verringerung der Gelbfärbung. Wird der b-Wert negativ, ergibt sich eine Blaufärbung.

Es bestand daher die Aufgabe, eine Formmasse zur Verfügung zu stellen, die die Eigenschaft des Ausschlusses von UV-Licht sowie einen möglichst geringen b-Wert als Maß für die Gelbfärbung der Formmasse besser kombiniert und so in der gleichzeitigen Erfüllung beider Kriterien die bisher bekannten Formmassen übertrifft.

Überraschenderweise wurde diese Aufgabe durch eine Formmasse gelöst, die zu mindestens 60 Gew.-% aus transparentem Polyamid besteht, wobei die Formmasse eine wirksame Menge eines oder mehrerer optischer Aufheller enthält und wobei die Menge des optischen Aufhellers so bemessen ist, dass
a) der b-Wert als Maß für die Gelbfärbung maximal 7, bevorzugt maximal 6, besonders bevorzugt maximal 5, insbesondere bevorzugt maximal 4 und ganz besonders bevorzugt maximal 3 beträgt, und weiterhin
b) die Transmission zwischen 370 und 430 nm zumindest in einem unteren Teilbereich und bevorzugt bei 400 nm kleiner als 1 % ist, gemessen bei einer Schichtdicke von vorzugsweise 4 mm, besonders bevorzugt von 2 mm und ganz besonders bevorzugt von 1 mm.

Transparente Polyamide sind bekannt (Kunststoffhandbuch 3/4, Hrsg. G. W. Becker und G. Braun, Seite 803 ff., Carl Hanser Verlag München, Wien, 1998). Im Sinne der Erfindung geeignete transparente Polyamide sind zum Beispiel auch in folgenden Schriften beschrieben: US-A-2 742 496, CH-B-480 381, CH-B-679 861, DE-A-22 25 938, DE-A-26 42 244, DE-A-27 43 515, DE-A-29 36 759, DE-A-27 32 928, DE-A-37 17 928, DE-A-4310 970, EP-A-0053 876, EP-A-0271 308, EP-A-0313 436, EP-A-0 725 100, EP-A-0 725 101 und WO 02/090421.

Die erfindungsgemäß verwendeten transparenten Polyamide, die auch in Form von Copolyamiden vorliegen können, werden beispielsweise aus folgenden Monomeren hergestellt:
- verzweigte oder unverzweigte aliphatische Diamine mit 6 bis 14 C-Atomen, wie z. B. 1.6-Hexamethylendiamin, 2-Methyl-1.5-diaminopentan, 2.2.4- bzw. 2.4.4-Trimethylhexamethylendiamin, 1.9-Nonamethylendiamin, 1.10-Decamethylendiamin oder 1.12-Dodecamethylendiamin;
- cycloaliphatische Diamine mit 6 bis 22 C-Atomen, wie z. B. 4.4'-Diaminodicyclohexylmethan, 3.3'-Dimethyl-4.4'-diaminodicyclohexylmethan, 4.4'-Diaminodicyclohexylpropan, 1.4-Diaminocyclohexan, 1.4-Bis(aminomethyl)-cyclohexan, 2.6-Bis(aminomethyl)-norbornan oder 3-Aminomethyl-3.5.5-trimethylcyclohexylamin;
- araliphatische Diamine mit 8 bis 22 C-Atomen, wie z. B. m- oder p-Xylylendiamin oder Bis(4-aminophenyl)propan;
- verzweigte oder unverzweigte aliphatische Dicarbonsäuren mit 6 bis 22 C-Atomen, wie z. B. Adipinsäure, 2.2.4- bzw. 2.4.4-Trimethyladipinsäure, Azelainsäure, Sebacinsäure oder 1.12-Dodecandisäure;
- cycloaliphatische Dicarbonsäuren mit 6 bis 22 C-Atomen, wie z. B. Cyclohexan-1.4-dicarbonsäure, 4.4'-Dicarboxyldicyclohexylmethan, 3.3'-Dimethyl-4.4'-dicarboxyldicyclohexylmethan, 4.4'-Dicarboxyldicyclohexylpropan und 1.4-Bis(carboxymethyl)cyclohexan;
- araliphatische Dicarbonsäuren mit 8 bis 22 C-Atomen, wie z. B. 4.4'-Diphenyimethandicarbonsäure;
- aromatische Dicarbonsäuren mit 8 bis 22 C-Atomen, wie z. B. Isophthalsäure, Tributylisophthalsäure, Terephthalsäure, 1.4-, 1.5-, 2.6- bzw. 2.7-Naphthalindicarbonsäure, Diphensäure oder Diphenylether-4.4'-dicarbonsäure;
- Lactame mit 6 bis 12 C-Atomen bzw. die entsprechenden ω-Aminocarbonsäuren, wie z. B. ε-Caprolactam, ε-Aminocapronsäure, Capryllactam, ω-Aminocaprylsäure, ω-Aminoundecansäure, Laurinlactam oder ω-Aminododecansäure.

Beispiele für erfindungsgemäß verwendbare transparente Polyamide sind:
- das Polyamid aus Terephthalsäure und dem Isomerengemisch aus 2.2.4- und 2.4.4-Trimethylhexamethylendiamin,
- das Polyamid aus Isophthalsäure und 1.6-Hexamethylendiamin,
- das Copolyamid aus einem Gemisch aus Terephthalsäure/Isophthalsäure und 1.6-Hexamethylendiamin,
- das Copolyamid aus Isophthalsäure, 3.3'-Dimethyl-4.4'-diaminodicyclohexylmethan und Laurinlactam oder Caprolactam,
- das (Co)Polyamid aus 1.12-Dodecandisäure oder 1.10-Decandisäure, 3.3'-Dimethyl-4.4'-diaminodicyclohexylmethan und gegebenenfalls Laurinlactam oder Caprolactam,
- das Copolyamid aus Isophthalsäure, 4.4'-Diaminodicyclohexylmethan und Laurinlactam oder Caprolactam,
- das Polyamid aus 1.12-Dodecandisäure und 4.4'-Diaminodicyclohexylmethan,
- das Copolyamid aus einem Terephthalsäure/Isophthalsäure-Gemisch, 3.3'-Dimethyl-4.4'-diaminodicyclohexylmethan und Laurinlactam.
Das transparente Polyamid kann im Rahmen der Erfindung auch ein Blend mehrerer verschiedener Polyamide sein. Eine oder mehrere Blendkomponenten können hierbei auch kristallin sein. Entscheidend ist nur, dass das Blend als solches transparent ist.

Optische Aufheller unterscheiden sich in ihrem Wirkprinzip von UV-Absorbern und UV-Stabilisatoren, da sie die im UV-Bereich in Form von Strahlung aufgenommene Energie in Form von längerwelliger Strahlung hauptsächlich im sichtbaren Bereich wieder abgeben, anstatt sie in Wärme umzuwandeln. Die Emission des Lichts durch den Aufheller erfolgt schwerpunktmäßig im blauen Bereich des sichtbaren Spektrums, wodurch ein Gelbstich ausgeglichen werden kann und ein weißer Aspekt, häufig mit bläulichem Unterton, entsteht. Aufgrund dieser Eigenschaft werden derartige Verbindungen seit geraumer Zeit eingesetzt, bevorzugt in der Textilindustrie in Faseranwendungen, aber auch in anderen Bereichen. Hierbei handelt es sich um nicht transparente Systeme. In diesem Fall wird der optische Aufheller in Verbindung mit UV-Absorbern und UV-Stabilisatoren, Weißpigmenten wie TiO₂, Bläuungsmitteln etc. eingesetzt, wobei der optische Aufheller eine Farbverbesserung des Systems bewirken soll, jedoch nicht den Ausschluss von UV-Licht. Eine derartige Verwendung ist in der EP 1 125 968 A1 beschrieben. Auch in transparenten Formmassen werden optische Aufheller eingesetzt, unter anderem bei Polycarbonat-Formmassen.

Die WO 01/92395 A1 beispielsweise zeigt, dass der optische Aufheller zur Farbverbesserung neben einem UV-Absorber verwendet wird. Eine entsprechende Anwendung eines optischen Aufhellers findet sich auch in der EP 0 680 996 A1. Nicht bekannt ist jedoch bislang die gezielte Anwendung von optischen Aufhellern in Formmassen zur Blockierung des Durchgangs von UV-Licht bei gleichzeitiger Realisierung eines stark verbesserten Gelbwerts.

Optische Aufheller sind im Handel zum Beispiel unter den Produktnamen Uvitex (Fa. Ciba) oder Hostalux (Fa. Clariant), hier beispielsweise Hostalux KS, Hostalux KS1, Hostalux KSB(neu) oder Hostalux KS1B erhältlich und beruhen auf einer Reihe verschiedener chemischer Grundstrukturen, die aber alle das oben beschriebene Phänomen der Fluoreszenz zeigen. Beispiele für Grundstrukturen sind Stilbene (unter anderem Uvitex OB-ONE der Fa. Ciba) oder Thiophene (unter anderem Uvitex OB der Fa. Ciba), die jeweils mit Benzoxazol-Einheiten substituiert sind, Bisbenzoxazole oder auch Verbindungen aus der Klasse der Biphenyle (unter anderem Uvitex FP der Fa. Ciba), Cumarine und andere mehr. Nähere Einzelheiten gehen aus Ullmann's Encyclopedia of Industrial Chemistry, 5. Auflage, Band A18, VCH Verlagsgesellschaft Weinheim 1991, Seiten 153 bis 176, hervor.

Die einzusetzende Menge des optischen Aufhellers kann durch ein einfaches Ausprobieren ermittelt werden. Für einen Einsatz in Polyamiden empfiehlt der Hersteller im Falle von optischen Aufhellern der Marke Hostalux KS (Fa. Clariant) beispielsweise eine maximale Dosiermenge von 250 ppm im Polymer. Bei derartigen Dosiermengen ist die Eigenschaft UV-cut-off bei 400 nm nicht erkennbar. Wird die Dosierung um einen Faktor 10 bis 100 erhöht, wird bei transparenten Polyamiden ein entsprechender cut-off sichtbar. Dies resultiert aus dem steilen Verlauf der Transmissionskurve der betreffenden Formmassen im Übergangsbereich. Im Falle anderer optischer Aufheller kann sich aufgrund deren spezifischer Stoffeigenschaften der erwünschte Effekt in optimaler Weise natürlich auch bei anderen Konzentrationen des optischen Aufhellers in der Formmasse einstellen. Es ist zu erwarten, dass die gewünschte Wirkung im Bereich von 0,00001 bis 10 Gew.-% auftritt. Selbstverständlich können auch Gemische verschiedener optischer Aufheller eingesetzt werden.

Der b-Wert wird gemäß DIN 53 236 an spritzgegossenen Platten von 4 mm Dicke in Auflicht gegen einen normgemäßen Weißstandard als Hintergrund gemessen.

Die Transmission wird nach ASTM D 1003 an spritzgegossenen Platten ermittelt.

Neben dem optischen Aufheller kann in der Formmasse auch ein üblicher UV-Absorber bzw. -Stabilisator enthalten sein, auch wenn diese Ausführungsform weniger bevorzugt ist. Allerdings ist die Konzentration des UV-Absorbers dann so geartet, dass durch seine Anwesenheit alleine die erwünschte UV-Schutzwirkung nicht eintritt. Derartige UV-Absorber können eine Reihe chemischer Grundstrukturen aufweisen, üblich sind beispielsweise Benzotriazole, Triazine, Benzophenone, Oxalsäureanilide, Cyanacrylate, Benzoxazinone und andere mehr.

Eine Verbesserung, d. h. Verringerung des b-Werts der Formmasse, der als Maß für die Gelbfärbung des Polymers herangezogen wird, unter Beibehaltung der UV-Schutzwirkung kann durch einen Einsatz eines optischen Aufhellers in Verbindung mit einem geeigneten Stabilisator bzw. Stabilisatorgemischen, beispielsweise Antioxidantien, erfolgen, die als Verarbeitungsstabilisatoren fungieren. Insbesondere sind zu nennen: Phosphor enthaltende Antioxidantien, Verbindungen aus der Klasse der sterisch gehinderten Phenole und Verbindungen, die Schwefel in einer niedrigen Oxidationsstufe enthalten. Besonders vorteilhaft ist der Zusatz von HALS-Stabilisatoren, die ebenfalls als UV-Stabilisatoren bezeichnet werden, wobei der Wirkmechanismus hier ein anderer ist. Er beruht auf einem chemischen Abfangen von Radikalen, die durch die Wirkung des UV-Lichts auf das Polymer entstehen, wobei der HALS-Stabilisator in der Reaktion verbraucht wird. Derartige Verbindungen sind beispielsweise unter den Handelsnamen Uvinol 4049 H, Uvinol 4050 H (Fa. BASF), Cyasorb 3853, Cyasorb 3346 (Fa. Cytec), Tinuvin 770 oder Tinuvin 622 (Fa. Ciba) erhältlich. Eine Stabilisierung der Formmasse mit einem oder mehreren Antioxidantien und/oder HALS-Verbindungen erhöht nicht nur die Stabilität der Formmasse bei der Verarbeitung, sondern insbesondere auch die Dauer der Funktionsfähigkeit der Formmasse im Sinne der Erfindung. Hinsichtlich Details sei auf Ullmann's Encyclopedia of Industrial Chemistry, 5. Auflage, Band A20, VCH Verlagsgesellschaft Weinheim 1992, Seite 459 bis 475, verwiesen.

Daneben kann die Formmasse noch beispielsweise folgende Zusatzstoffe enthalten:
- Weitere Polymere, wie z. B. polymere Fließhilfsmittel, wie sie z. B. aus der EP 1 120 443 A2 bekannt sind, polymere Flammschutzmittel oder Schlagzähmodifikatoren, etwa isorefraktive gepfropfte Kern-Schale-Polymere;
- Füllstoffe bzw. Verstärkungsstoffe, wie z. B. isorefraktive Glasfasern oder Glaskugeln sowie nanoskalige anorganische Materialien;
- Pigmente, andere Farbmittel, Weichmacher, Antistatika, Entformungshilfen, Fließmittel, Flammschutzmittel und dergleichen.

Die Menge aller Zusatzstoffe zusätzlich zur Mischung aus Polyamid und optischem Aufheller beträgt bevorzugt höchstens 30 Gew.-%, bezogen auf die Formmasse, besonders bevorzugt höchstens 20 Gew.-% und ganz besonders bevorzugt höchstens 10 Gew.-%

Die Formmasse lässt sich zum Beispiel durch Eincompoundieren der Aufheller und Zusatzstoffe in einem Zweischneckenextruder oder sonstigen technischen Vorrichtungen zur Einmischung von Feststoffen in Polymerschmelzen oder durch Zudosieren der Zusatzstoffe in Vorrichtungen, die zur Herstellung von Polymerschmelzen dienen, herstellen. Hierbei können Aufheller und Zusatzstoffe als solche oder in Form eines Masterbatches zugesetzt werden.

Weiterhin ist es möglich, die entsprechenden Bestandteile bereits während, vor oder auch nach der Polykondensation in den Polykondensationsreaktor oder diesem vorgeschaltete Aufschmelz- oder Mischbehälter zu dosieren. Ebenso können die Additive mit Monomeren, Wasser oder Lösungsmitteln vermischt werden, bevor diese in den Polykondensationsprozess gelangen. Eine Dosierung ist auch in die dem Polykondensationsprozess entstammende, aus dem Reaktionsapparat austretende Schmelze möglich, wobei beispielsweise ein nachgeschalteter Ausfahrextruder benutzt werden kann.

Eine weitere Möglichkeit zur Einarbeitung von optischen Aufhellern und Stabilisatoren besteht in der festen Phase gemäß DE 43 01 808 A.

Durch die erfindungsgemäße Ausrüstung der Polyamidformmasse wird es erstmals möglich, die cut-off-Wellenlänge bei Werten oberhalb 400 nm anzusetzen, wobei der Farbwert b unterhalb von 7 bleibt. Damit wird erreicht, dass ein zusätzlicher Sicherheitsabstand zu schädlichen Wellenlängen entsteht. Je nach Anwendung kann die Lage des cut-offs durch Art und Menge des zugesetzten optischen Aufhellers gesteuert werden. Generell liegt der cut-off in einem anwendungsrelevanten Bereich von etwa 370 bis etwa 430 nm.

Entsprechende Formmassen mit den oben angegebenen Merkmalen a) und gegebenenfalls b) werden zur Herstellung optischer Körper verwendet, die ebenfalls Gegenstand der Erfindung sind. Optische Körper sind solche, durch die Licht entweder gebündelt oder ungebündelt hindurchtritt, das auf der Austrittsseite dann mit dem Auge wahrgenommen wird. Beispielsweise sind dies optische Linsen für Brillen und insbesondere Sonnenbrillen, Kameras, Ferngläser, Lupen, Mikroskope, elektrooptische Mess- und Prüfgeräte, optische Filter, Scheinwerferlinsen, Lampenlinsen, Linsen für Projektoren und Beamer, Sichtfenster, Schaugläser, Schutzscheiben und -visiere sowie Sonnenschutzdächer und Verglasungen im Wohn- oder Automobilsektor. Daneben können transparente Formteile, Fasern oder Folien für vielfältige, auch andere, Anwendungen hergestellt werden, beispielsweise Lebensmittelverpackungen, Arzneimittelverpackungen, Kosmetikverpackungen oder Folien für die Landwirtschaft. Die Formteile werden nach den üblichen Methoden der Kunststoffverarbeitung hergestellt, beispielsweise durch Spritzgießen oder Extrusion.

Die erfindungsgemäße Formmasse kann auch als transparente Beschichtung auf optische Körper beliebiger Zusammensetzung aufgebracht werden. Es ist auch möglich, eine Folie herzustellen, die einen optischen Aufheller enthält und die dann zum Beispiel hinterspritzt wird, so dass eine Linse oder ein transparentes Formteil erhalten wird.

Als Weiterentwicklung dieser Erfindung kann der optische Aufheller oder eine Mischung verschiedener optischer Aufheller auch als Bestandteil einer anders zusammengesetzten Beschichtung, etwa eines Lacks, auf den optischen Körper aus einer transparenten Polyamidformmasse aufgebracht werden.

Im Rahmen der Erfindung ist bevorzugt, dass die Transmission zwischen 370 und 430 nm zumindest in einem unteren Teilbereich bei der gegebenen Schichtdicke des Formteils maximal 10 %, besonders bevorzugt maximal 6 % bzw. maximal 5 %, 4 %, 3 %, 2 % oder 1 % beträgt.

### Beispiele 1 bis 7 und Vergleichsbeispiele 1 bis 5

### 1. Herstellung der Formmassen:

Zur Herstellung der transparenten Polyamidformmassen wurde TROGAMID® CX7323 (Degussa AG) als Ausgangsstoff eingesetzt. Das Granulat wies einen Wassergehalt von weniger als 0,1 Gew.-% auf.

Als Additive wurden folgende Substanzen eingesetzt:
A: Hostalux® KSp, ein Benzoxazolderivat (optischer Aufheller)
B: Hostalux® KSBp, ein Gemisch von Benzoxazolderivaten (optischer Aufheller)
C: Hostalux® KS1p, ein Benzoxazolderivat (optischer Äufheller)
D: Hostalux® KS1Bp, ein Benzoxazolderivat (optischer Aufheller)
E: Irgafos® 168, ein Phospit (Wärmestabilisator)
F: Cyasorb® 1164, ein Triazinderivat (UV-Absorber)
G: Cyasorb® 3638, ein Benzoxazinonderivat (UV-Absorber)
H: Cyasorb® 3346, (Poly[6-morpholino-s-triazin-2,4-diyl)[2,2,6,6-tetramethyl-4-piperidyl)imino]-hexamethylen[(2,2,6,6-tetramethyl-4-piperidyl)imino]], UV Absorber)
J: Tinuvin® 326, ein Benzotriazolderivat (UV-Absorber)

Die Additive wurden über eine Pulvermischung aus Additiv und verrnahlenem CX7323 dosiert; ihre Einarbeitung erfolgte auf einem Zweischneckenextruder Berstorff ZE25-33D bei einer Schmelzetemperatur von 280 °C und einer Drehzahl von 250 s⁻¹. Der Werkzeugdruck betrug 40 bar. Die erhaltenen Compounds wurden granuliert und bei 100 °C unter Vakuum getrocknet, bis ein Wassergehalt von maximal 0,1 Gew.-% erhalten wurde. Die hierfür notwendige Zeit lag typischerweise bei 12 h.

Die Zusammensetzung der erhaltenen Formmassen geht aus der Tabelle 1 hervor.

### 2. Herstellung von Probekörper:

Die Herstellung von Probekörpern erfolgte durch Spritzguss aus den erhaltenen Granulaten der Formmassen. Es wurden Rechteckscheiben 60 x 60 x 2 mm und Rundscheiben 60 x 4 mm angefertigt. Die Herstellung erfolgte auf einer Spritzgussmaschine Engel ES 240/65 bei einer Temperatur von 280 °C und einer Werkzeugtemperatur von 80 °C.

### 3. Messungen an spritzgegossenen Probekörpern:

Die Messung der Transmissionswerte erfolgte nach ASTM 1003 an einem Messgerät Lambda 19 der Firma Perkin Elmer. Bestimmt wurde die reguläre Transmission wie im Abschnitt 4.3 der ASTM 1003 beschrieben. Zu diesem Zweck befanden sich die Probekörper während der Messung in einem Abstand von 150 mm zum Einlass der Ulbrichtschen Kugel. Messungen erfolgten an beiden oben beschriebenen Probekörpern.

Die Messung des b-Wertes erfolgte nach DIN 53 236 mittels eines Chroma-Meter CR-310 der Firma Minolta. Die Messgeometrie war wie folgt: Betrachtung unter 0° (d/0 Methode) mit Glanzeinschluss. Gemessen wurde in Aufsicht gegen einen Weiß-Reflektor CR-A44 (Minolta) bei der Normlichtart D65; die spektrale Empfindlichkeit der Messkörper entsprach dem 2° Normalbeobachter. Die Messungen erfolgten an den Rundscheiben 60 x 4 mm.

Die Messergebnisse sind in der Tabelle 2 wiedergegeben.

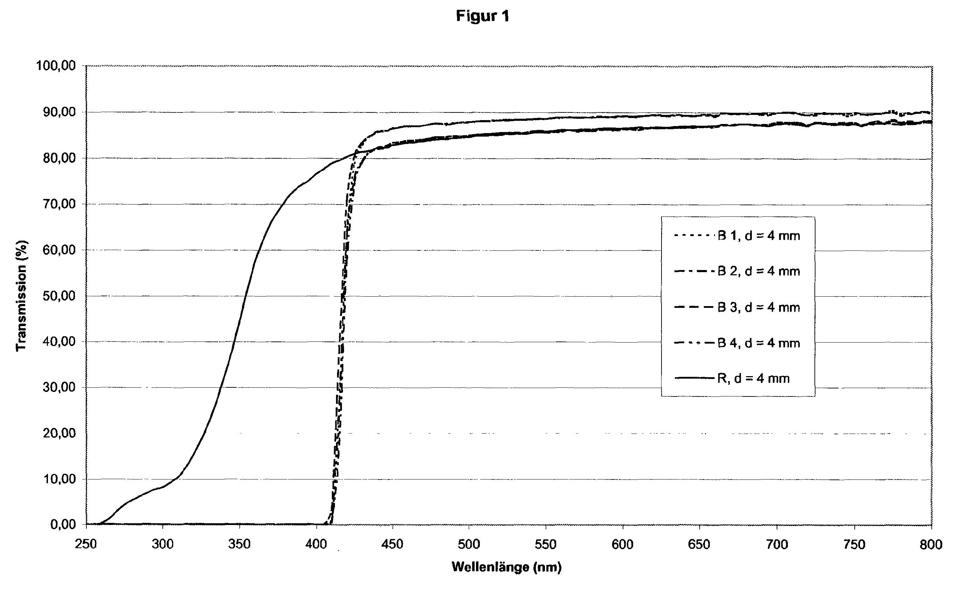

In der Figur 1 ist die Transmission der Probekörper gemäß den Beispielen 1 bis 4 mit der Transmission der Referenz (reines CX7323) verglichen. Man erkennt deutlich den UV-cut-off bei einer Wellenlänge von etwas über 400 nm, verbunden mit einem sprunghaften Anstieg der Transmission.

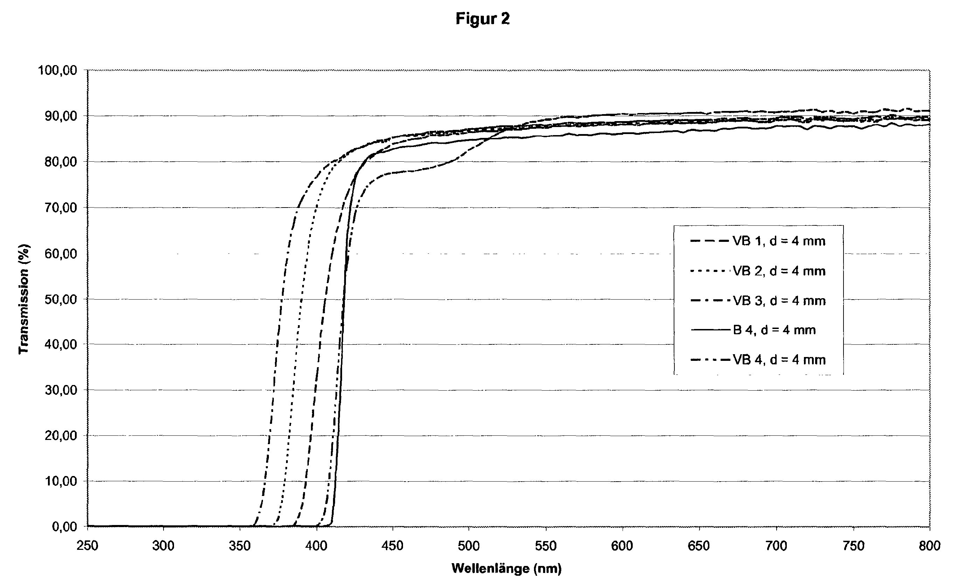

Aus der Figur 2 geht hervor, dass bei Verwendung von UV-Absorbern entweder der Ausschluss von UV-Licht nicht ausreichend ist (VB 1-3) oder dort, wo er vergleichbar mit einer erfindungsgemäßen Formmasse ist, die Transmission zu Beginn des sichtbaren Spektrums verringert ist, so dass ein gelber Farbeindruck resultiert.

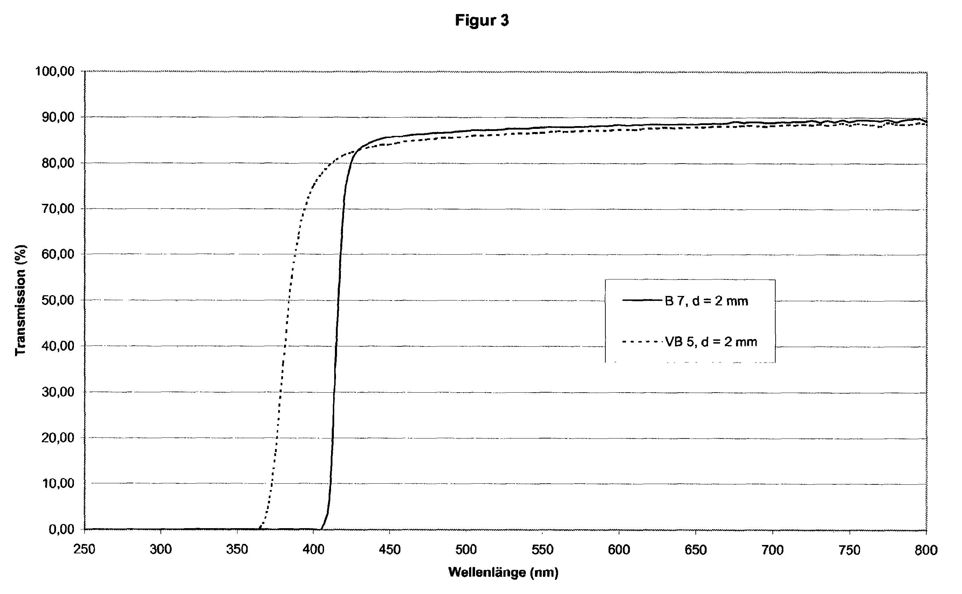

In der Figur 3 werden eine Formmasse mit UV-Absorber (VB 5) einer Formmasse gegenübergestellt, die zusätzlich noch eine kleine Menge an optischem Aufheller enthält (B 7). Man erkennt, dass die verwendete Menge UV-Absorber alleine nicht für den erfindungsgemäßen UV-cut-off ausreicht.

**Tabelle 1:**

| Zusammensetzung der Formmassen (jeweils Gewichtsteile) | | | | | | | | | | |
|---|---|---|---|---|---|---|---|---|---|---|
| | CX7323 | A | B | C | D | E | F | G | H | I |
| R | 100 | | | | | | | | | |
| B1 | 100 | 0,03 | | | | | | | | |
| B2 | 100 | | 0,03 | | | | | | | |
| B3 | 100 | | | 0,03 | | | | | | |
| B4 | 100 | | | | 0,03 | | | | | |
| B5 | 100 | | | 0,03 | | 0,5 | | | | |
| B6 | 100 | | | | 0,03 | 0,5 | | | | |
| B7 | 100 | | | 0,03 | | | 0,1 | | 0,1 | |
| VB1 | 99 | | | | | | 1 | | | |
| VB2 | 99,9 | | | | | | 0,1 | | | |
| VB3 | 99,9 | | | | | | | 0,1 | | |
| VB4 | 99,8 | | | | | | | | | 0,2 |
| VB5 | 100 | | | | | | 0,1 | | 0,1 | |
| R = Referenz | | | | | | | | | | |
| B = Beispiel | | | | | | | | | | |
| VB = Vergleichsbeispiel | | | | | | | | | | |

**Tabelle 2:**

| Messergebnisse | | | | | |
|---|---|---|---|---|---|
| | Transmission (%) | | | | |
| | b @ 4 mm | 380 nm | 390 nm | 400 nm | 410 nm |
| R | 5,6 | 70,8 | 74,2 | 76,6 | 78,9 |
| B1 | 6,4 | 0,1 | 0,1 | 0,1 | 1,1 |
| B2 | 6,7 | 0,1 | 0,1 | 0,1 | 0,5 |
| B3 | 6,1 | 0,1 | 0,1 | 0,3 | 3,5 |
| B4 | 6,9 | 0,1 | 0,1 | 0,1 | 1,2 |
| B5 | 5,6 | 0,1 | 0,1 | 0,1 | 0,3 |
| B6 | 3,6 | 0,1^{a} | 0,1^{a} | 0,1^{a} | 8,7^{a} |
| B7 | 6,6 | 0,1^{a} | 0,1^{a} | 0,1^{a} | 5,7^{a} |
| VB1 | 8,3 | 0 | 4 | 33,2 | 59,8 |
| VB2 | 6 | 12,7 | 49,7 | 70,3 | 78,3 |
| VB3 | 6,2 | 57,4 | 71,6 | 76,7 | 79,8 |
| VB4 | 13,4 | 0 | 0 | 0,2 | 17 |
| VB5 | 5,7 | 38,6^{a} | 49,5^{a} | 53,2^{a} | 71,8^{a} |

| | | | | | |
|---|---|---|---|---|---|
| a) gemessen an Probekörpern mit 2 mm Dicke (alle anderen Messungen wurden an Probekörpern mit 4 mm Dicke durchgeführt) | | | | | |

### Beispiel 8 und Vergleichsbeispiel 6: Herstellung von Linsen

Die Herstellung von Linsen mit 70 mm Durchmesser und 2,3 mm Dicke erfolgte durch Spritzguss aus den erhaltenen Granulaten der Formmassen gemäß Beispiel 5 und Vergleichsbeispiel 4. Verwendet wurde eine Spritzgießmaschine Engel ES 600 bei einer Schmelzetemperatur von 280 °C und einer Werkzeugtemperatur von 80 °C. Es wurde ein 8-fach-Linsenwerkzeug benutzt.

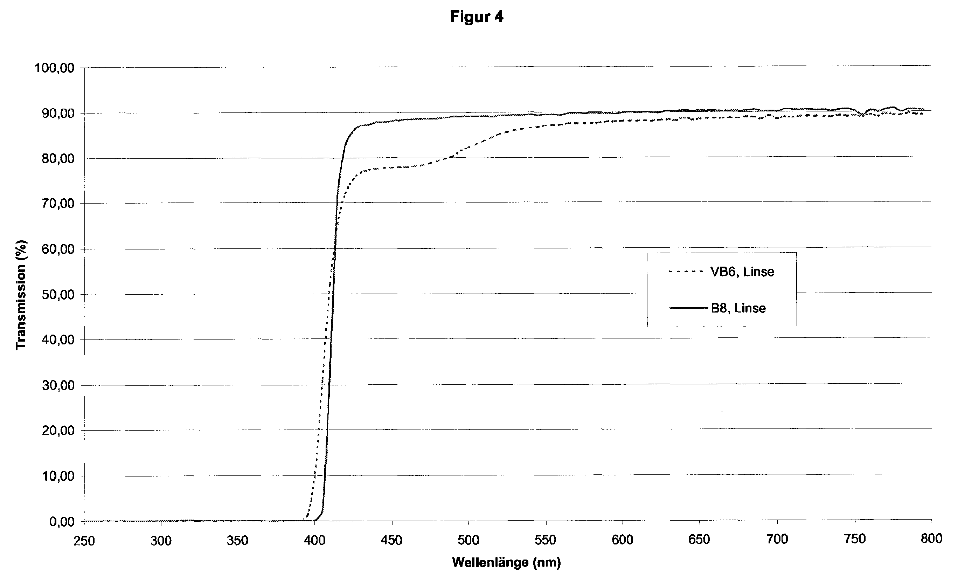

Die analytischen Messungen an den Linsen erfolgten analog zu den an den Probekörpern durchgeführten Messungen. Die Messergebnisse sind in der Tabelle 3 wiedergegeben, während in der Figur 4 die Transmission der Linsen verglichen wird.

**Tabelle 3:**

| Messergebnisse Linsen | | | | | |
|---|---|---|---|---|---|
| | Transmission (%) | | | | |
| | b @ 2,3 mm | 380 nm | 390 nm | 400 nm | 410 nm |
| B8 | 3,9 | 0,2 | 0,1 | 0,1 | 2,6 |
| VB6 | 14,3 | 0 | 0 | 1,3 | 31,2 |

## Patentansprüche

1. Formmasse, die zu mindestens 60 Gew.-% aus transparentem Polyamid besteht, wobei die Formmasse eine wirksame Menge eines oder mehrerer optischer Aufheller enthält und wobei die Menge des optischen Aufhellers so bemessen ist, dass
a) der b-Wert als Maß für die Gelbfärbung maximal 7 beträgt und weiterhin
b) die Transmission zwischen 370 und 430 nm zumindest in einem unteren Teilbereich kleiner als 1 % ist, gemessen bei einer Schichtdicke von 4 mm.

2. Verwendung eines oder mehrerer optischer Aufheller zur weitgehenden Verhinderung des Durchtritts von UV-Licht durch einen optischen Körper aus einer Formmasse, die zu mindestens 60 Gew.-% aus transparentem Polyamid besteht.

3. Optischer Körper aus einer Formmasse, die zu mindestens 60 Gew.-% aus transparentem Polyamid besteht, wobei die Formmasse eine wirksame Menge eines oder mehrerer optischer Aufheller enthält und wobei die Menge des optischen Aufhellers so bemessen ist, dass der b-Wert als Maß für die Gelbfärbung maximal 7 beträgt.

4. Optischer Körper gemäß Anspruch 3,
**dadurch gekennzeichnet,**
**dass** weiterhin die Transmission zwischen 370 und 430 nm zumindest in einem unteren Teilbereich bei der gegebenen Schichtdicke des Formteils maximal 10 % beträgt.

5. Optischer Körper gemäß einem der Ansprüche 3 und 4,
**dadurch gekennzeichnet,**
**dass** er ausgewählt ist aus der Gruppe optische Linsen für Brillen, Kameras, Ferngläser, Lupen, Mikroskope oder elektrooptische Mess- und Prüfgeräte, optische Filter, Scheinwerferlinsen, Lampenlinsen, Linsen für Projektoren oder Beamer, Sichtfenster, Schaugläser, Schutzscheiben und -visiere, Sonnenschutzdächer sowie Verglasungen im Wohn- oder Automobilsektor.

6. Optischer Körper,
**dadurch gekennzeichnet,**
**dass** er mehrschichtig aufgebaut ist, wobei eine Schicht aus der Formmasse gemäß Anspruch 1 besteht.

7. Optischer Körper aus transparentem Polyamid,
**dadurch gekennzeichnet,**
**dass** auf ihn eine Beschichtung aufgebracht ist, die einen oder mehrere optische Aufheller enthält.

8. Optischer Körper gemäß Anspruch 7,
**dadurch gekennzeichnet,**
**dass** die Beschichtung ein Lack ist.
